Europäisches Patentamt

European Patent Office

Office européen des brevets

(19)

(11) Veröffentlichungsnummer: **0 068 380**
**B1**

# (12) EUROPÄISCHE PATENTSCHRIFT

(45) Veröffentlichungstag der Patentschrift:
04.06.86

(21) Anmeldenummer: **82105419.4**

(22) Anmeldetag: **21.06.82**

(51) Int. Cl.⁴: **G 11 B 5/70, H 01 F 1/113**

(54) **Verfahren zur Herstellung von magnetischen, bindemittelhaltigen Dispersionen.**

(30) Priorität: **30.06.81 DE 3125567**

(43) Veröffentlichungstag der Anmeldung:
**05.01.83 Patentblatt 83/1**

(45) Bekanntmachung des Hinweises auf die Patenterteilung:
**04.06.86 Patentblatt 86/23**

(84) Benannte Vertragsstaaten:
**DE FR GB IT NL**

(56) Entgegenhaltungen:
**US - A - 4 107 385**

**Die Akte enthält technische Angaben, die nach dem Eingang der Anmeldung eingereicht wurden und die nicht in dieser Patentschrift enthalten sind.**

(73) Patentinhaber: **AGFA-GEVAERT Aktiengesellschaft, D-5090 Leverkusen 1 (DE)**

(72) Erfinder: **Gerum, Johannes, Dr., Blumenstrasse 51, D-8034 Unterpfaffenhofen-Germering (DE)**
Erfinder: **Nippe, Burkhard, Dr., Krennerweg 20, D-8000 München 71 (DE)**
Erfinder: **Kober, Heinrich, Dr., Georgstrasse 12, D-8021 Hohenschäftlarn (DE)**
Erfinder: **Kohler, Robert, Dr., Im Burgstall 12, D-7123 Sachsenhelm 2 (DE)**

**Beschreibung**

Die Erfindung betrifft ein Verfahren zur Dispergierung von nadelförmigen, ferromagnetischen Pigmenten für Magnetbänder unter Verwendung von organischen Borverbindungen als Dispergatoren.

Es ist bekannt, dass die Aufzeichnungsqualität eines magnetischen Speichermediums massgeblich durch die Qualität der Dispergierung der magnetischen Pigmente in der Dispersion bestimmt wird.

Üblicherweise werden zur Dispergierung von magnetischen Pigmenten oberflächenaktive Substanzen eingesetzt, je nach der Oberflächenladung des Pigments, als anionische, kationische, amphotere oder ungeladene Verbindung. Eine optimale dispergierende Wirkung wird nur erzielt, wenn die zu dispergierenden Pigmente irreversibel von einer unimolekularen Schicht der oberflächenaktiven Substanz belegt sind, wodurch ein Zusammenlagern der Pigmentteilchen untereinander verhindert wird. Die bisher eingesetzten oberflächenaktiven Substanzen, wie z. B. Lecithin, erfüllen diese Anforderungen nur teilweise, so dass einerseits nicht ausreichend fest an die Pigmentteilchenoberfläche gebundene Substanzen in der Schicht wandern und zu ungewollten Schmiereffekten des Magnetbandes führen, oder andererseits immer ein Anteil von Pigmentzusammenballungen zurückbleibt, wodurch die elektroakustischen Werte des Magnetbandes, insbesondere die Rauscheigenschaften, nachteilig beeinflusst werden.

Die Schwierigkeit der irreversiblen Separierung der einzelnen Pigmentteilchen durch oberflächenaktive Substanzen stellt sich besonders beim Einsatz von nadelförmigen Eisenpigmenten als magnetische Pigmente heraus. Aufgrund der deutlich höheren Magnetisierungsdichte der Metallpigmente im Vergleich zu den bisher eingesetzten Eisen- oder Chromoxiden sind die Anziehungskräfte zwischen den einzelnen Pigmentteilchen wesentlich schwerer zu überwinden, was sich in einer beschleunigten Zusammenlagerung der Metallteilchen nach erfolgter Dispergierung bemerkbar macht. Somit lässt sich durch Einsatz herkömmlicher oberflächenaktiver Substanzen der erforderliche Dispersionsgrad insbesondere mit Metallpigmenten nicht immer erreichen. Dies äussert sich in der magnetischen Dispersion durch Verklumpung der Pigmente und mangelnder Dispersionsstabilität, auf der Magnetbandoberfläche durch starke Riefigkeit und durch verschlechterte elektroakustische Eigenschaften.

Der Erfindung liegt daher die Aufgabe zugrunde, durch Einsatz geeigneter oberflächenaktiver Substanzen eine magnetische Dispersion zu erzeugen, die auch bei Einsatz von Metallpigmenten den erforderlichen Dispersionsgrad ermöglichen.

Diese Aufgabe wird erfindungsgemäss gelöst durch ein Verfahren zur Herstellung von magnetischen, bindemittelhaltigen Dispersionen, denen vor dem Beguss auf den Schichtträger eine organische Borverbindung zugesetzt wird, welche erhalten wurde, indem 1–2 Mol mehrwertiger Alkohole mit jeweils soviel benachbarten OH-Gruppen mit 1 Mol Borsäure umgesetzt wurde(n), dass bezogen auf ein Bor-Atom insgesamt 5 oder mehr OH-Gruppen vorhanden waren, wonach das so erhaltene Borat mit Ethylenoxid in einem Molverhältnis von 1–40 bezogen auf 1 Mol Borat und/oder mit einer Carbonsäure mit 8–22 C-Atomen umgesetzt wurde, dadurch gekennzeichnet, dass die organische Borverbindung zur Mahlung der magnetischen Dispersion in einer Menge von 3–12 Gewichtsteilen bezogen auf 100 Gewichtsteile magnetischer Pigmente zugesetzt und die Dispersion nach der Mahlung in an sich bekannter Weise mit polymeren Bindemitteln vermischt wird.

Der erforderliche Dispergierungsgrad wird bereits nach kurzer Mahldauer erreicht, in der die zunächst zusammengelagerten Pigmente in monodisperse Pigmentteilchen getrennt werden. Die dabei erreichte Viscosität bleibt über einen langen Zeitraum erhalten und im fertigen Magnetband bleiben keine frei beweglichen Anteile des erfindungsgemässen Dispergierungsmittels zurück. Entscheidend ist für das erfindungsgemässe Verfahren, dass der Dispergator bereits zur Mahlung eingesetzt wird. Werden andere bekannte Dispergatoren oder die erfindungsgemässen Verbindungen erst nach der Mahlung bzw. vor dem Beguss der Dispersion auf einen Schichtträger zugesetzt, wie z. B. in DE-A-2 341 168, so werden die vorher genannten Vorteile nicht erhalten. Obwohl ein günstiger Dispergierungsgrad bei allen magnetischen Pigmenten erreicht wird, gilt dies insbesondere für magnetische Metallpigmente wie Fe und deren Legierungen.

Weitere Einzelheiten ergeben sich aus den Unteransprüchen und den Ausführungsbeispielen.

Die bevorzugt als Dispergierungsmittel für magnetische Dispersionen eingesetzten organischen Borverbindungen sind solche, die einen Mono- oder Diester einer Carbonsäure mit 8–22 C-Atomen und solche, die Polyethylenoxid allein und/oder einen Mono- oder Diester einer Fettsäure enthalten.

Die organischen Borverbindungen werden zur Mahlung zugesetzt und zwar in einer Menge von 3–12 Gewichtsteilen pro 100 Gewichtsteilen der magnetischen Pigmente, insbesondere in einer Menge von 3–6 Gewichtsteilen.

Die Herstellung der als Dispergatoren eingesetzten Verbindungen ist beispielsweise in den Patentschriften US-A-3 852 314 und GB-A-1 295 877 (entspricht FR-A-2 025 541) beschrieben.

Die Borverbindungen werden erhalten durch Umsetzung von 1 Mol Borsäure mit 1–2 Mol eines mehrwertigen Alkohols mit jeweils benachbarten OH-Gruppen, wie zum Beispiel Glycerin, Sorbitan, Manitol, wobei ein Borat erhalten wird, bei dem auf ein Bor-Atom 5 oder mehr OH-Gruppen kommen. Anschliessend werden 1–40 Mol Ethylenoxid bezogen auf 1 Mol erhaltenes Borat, in Gegenwart von aprotonischen Lewissäuren zugesetzt, in der Art, dass der durchschnittliche Polymerisationsgrad des Ethylenoxidrestes im Endprodukt 1–40 beträgt. Das dadurch erhaltene Produkt wird mit einer Carbonsäure mit 8–22 C-Atomen umgesetzt. Als Carbonsäuren kommen beispielsweise in Frage Caprin-, Laurin-, Palmitin-, Stearin-, Ölsäure.

Von den Borverbindungen mit einem Mono-Ester einer Fettsäure können oberflächenaktive Substanzen für magnetische Dispersionen z.B. Glycerinboratlaurat, Glycerinboratpalmitat, Glycerinboratstearat, Glycerinboratisostearat, Glycerinboratoleat und Glycerinborathydroxystearat verwendet werden. Von den Borverbindungen mit einem di-Ester einer Fettsäure sind z.B. Glycerinborat-di-oleat und Glycerinborat-di-stearat geeignet.

Von den Borverbindungen, die einen mono-Ester einer Fettsäure und Polyethylenoxid enthalten, sind z.B. Polyoxyethylenglycerinboratlaurat, Polyoxyethylenglycerinboratpalmitat, Polyoxyethylenglycerinboratstearat, Polyoxyethylenglycerinboratoleat und Polyoxyethylenglycerinboratisostearat geeignet. Während ähnliche Borverbindungen, die einen di-Ester einer Fettsäure enthalten, z.B. Polyoxyethylenglycerinborat-di-stearat, -di-oleat und Polyoxyethylenglycerinborat-di-oleat sind.

Zur Herstellung einer magnetischen Dispersion können $\gamma$-$Fe_2O_3$, $Fe_3O_4$, Kobalt-dotiertes $\gamma$-$Fe_2O_3$, Kobalt-dotiertes $Fe_3O_4$, $CrO_2$, Fe oder Fe-Legierungen wie Fe-Co, Fe-Ni und ähnliche, die bevorzugt als nadelförmige Pigmente ein Verhältnis der Längs- zu Querachse von 1:10 bis 1:3 besitzen, eingesetzt werden.

Als Bindemittel für die Pigmente können die für die Herstellung von Magnetbändern bekannten Bindemittel verwendet werden, wie z.B. Copolymere aus Vinylchlorid, Vinylacetat und Vinylalkohol, Polyvinylacetale, Copolymere aus Vinylidenchlorid und Acrylnitril oder Polyurethane, Polycarbonate, Phenoxyharze oder Epoxyharze.

Um ein gleichmässiges und reibungsarmes Laufverhalten von Magnetbändern zu erreichen, ist die Zugabe von Gleitmitteln vor dem Beguss erforderlich. Für diesen Zweck geeignete Substanzen sind u.a. Fettsäuren, Fettsäureester, Polysiloxane, Squalan, Polyethylen, Polyoxyethylen, flüssige Paraffine, $MoS_2$ oder Graphit. Sind die Fettsäuren oder das Polyoxyethylen chemisch über einen mehrwertigen Alkohol mit Bor verknüpft wie z.B. in DE-A-2 341 168, so verringert sich die Gleitwirkung gegenüber den freien Fettsäuren oder dem Polyoxyethylen.

Dies wird deutlich, wenn die Oberflächenreibung eines Magnetbandes gemessen wird. Bei diesem Test wird ein auf 12,7 mm getrenntes Magnetband schichtseitig über einen Stahl-Zylinder mit einem Durchmesser von 100 mm und einer Oberflächenrauhigkeit von $R_a = 0{,}25$ µm mit einer Geschwindigkeit von 5 cm s$^{-1}$ gezogen. Der Reibungskoeffizient µ errechnet sich nach:

$$\mu = \frac{1}{\pi}\ln\frac{F_2}{F_1} \text{ , wobei}$$

$F_1$ = Reibungskraft ohne Reibkörper (konst.)
$F_2$ = $F_1$ + Reibungsanteil des Zylinders ist.

Das magnetische Pigment wird in einer geeigneten Menge Lösungsmittel mit einer oder mehreren der beschriebenen Borverbindungen vermischt, dann intensiv in einer Sand- oder Kugelmühle gemahlen. Nach Mahlende wird das gelöste Bindemittel und Gleitmittel eingemischt. Anschliessend wird die magnetische Dispersion auf einen nicht magnetischen Schichtträger, der z.B. aus Polyethylenterephthalat, Polypropylen, Polyvinylacetat, Polycarbonat bestehen kann, aufgetragen.

Die Erfindung wird anhand der folgenden Beispiele erläutert werden.

Als Qualitätsmerkmal der Dispersion wird die Ausrichtbarkeit der Pigmentteilchen, das Modulationsrauschen und die Empfindlichkeit bei 10 kHz betrachtet.

Beispiel 1

Die magnetische Dispersion wird aus folgenden Bestandteilen in den angegebenen Anteilen zubereitet:

| | |
|---|---|
| Fe-Ni-Legierung | 100 Gew.-Teile |
| Glycerinboratoleat | 4 Gew.-Teile |
| teilhydrolysiertes Copolymerisat aus Vinylchlorid und Vinylacetat | 5 Gew.-Teile |
| Polyester-Polyurethan | 15 Gew.-Teile |
| Stearinsäure | 2 Gew.-Teile |
| Cyclohexanon | 150 Gew.-Teile |
| Tetrahydrofuran | 150 Gew.-Teile |

Das Metallpigment wird mit 75 Gew.-Teilen Tetrahydrofuran (THF), 75 Gew.-Teilen Cyclohexanon und Glycerinboratoleat innig vermischt und in einer Sandmühle gemahlen. Nach dem Mahlende wird das gelöste Copolymerisat, das gelöste Polyester-Polyurethan-Harz und die Stearinsäure mit der magnetischen Dispersion vermischt. Die Dispersion wird in bekannter Weise auf einen Schichtträger aus Polyethylenterephthalat aufgebracht, der zu einer geeigneten Breite geschnitten wird.

Gemessen wird die Ausrichtung der Pigmentteilchen $M_R/M_S$ (Quotient aus der remanenten Magnetisierungsdichte und der Sättigungsmagnetisierungsdichte bei 318 A/cm, das Modulationsrauschen und die Empfindlichkeit bei 10 kHz.

Beispiel 2

Die beim Beispiel 1 beschriebenen Verfahren wurden wiederholt, jedoch unter Verwendung von Polyoxyethylenglycerinboratoleat.

Beispiel 3, 4 und 5

Die beim Beispiel 1 beschriebenen Verfahren wurden wiederholt, jedoch unter Verwendung einer Mischung aus Glycerinboratoleat mit einem herkömmlichen Dispergator im Gewichtsverhältnis 1:1. Im Beispiel 3 wurde eine Mischung mit Reinlecithin, im Beispiel 4 mit einem Polyoxyethylenphosphorsäureester und im Beispiel 5 mit Dioctylsulfosuccinat eingesetzt.

Vergleichsbeispiel 6 und 7

Anstelle der im Beispiel 1 und 2 eingesetzten erfindungsgemässen Verbindungen wird im Vergleichsbeispiel 6 das Gemisch eines primären und sekundären Phosphorsäureesters vom Umsetzungsprodukt aus Alkylphenol mit Polyethylenglycol und im Vergleichsbeispiel 7 mit Aceton extrahiertes Reinlecithin eingesetzt.

Vergleichsbeispiel 8

100 Gew.-Teile der Fe-Ni-Legierung wurden mit 75 Gew.-Teilen THF und 75 Gew.-Teilen Cyclohexanon in einer Sandmühle gemahlen. Nach dem Mahlende wurden 5 Gew.-Teile eines teilweise hydrolysierten Copolymeren aus Vinylchlorid und Vinylacetat, 15 Gew.-Teile eines Polyester-Polyurethanharzes und 2 Gew.-Teile Glycerinboratoleat zugegeben. Die so erhaltene Mischung wird in bekannter Weise auf einen Schichtträger aus Polyester aufgetragen und in eine geeignete Bandbreite getrennt.

Vergleichsbeispiel 9

100 Gew.-Teile der Fe-Ni-Legierung wurden mit 75 Gew.-Teilen THF und 75 Gew.-Teilen Cyclohexanon und 4 Gew.-Teilen mit Aceton extrahiertem Lecithin in einer Sandmühle gemahlen. Nach dem Mahlende wurden 5 Gew.-Teile eines teilweise hydrolysierten Copolymeren aus Vinylchlorid und Vinylacetat, 15 Gew.-Teile eines Polyester-Polyurethanharzes und 2 Gew.-Teile Glycerinboratoleat zugegeben. Die weitere Verarbeitung erfolgt wie in Vergleichsbeispiel 8 beschrieben.

| | $M/M_{4000}$ | Modulations-rauschen | Empfindlichkeit bei 10 kHz | Reibungs-koeffizient $\mu$ |
|---|---|---|---|---|
| Beispiel 1 | 0,86 | +5 dB | +3 dB | 0,29 |
| Beispiel 2 | 0,85 | +4 dB | +3 dB | 0,29 |
| Beispiel 3 | 0,84 | +4 dB | +3 dB | |
| Beispiel 4 | 0,83 | +2 dB | +3 dB | |
| Beispiel 5 | 0,83 | +3 dB | +3 dB | |
| Vergleichs-beispiel 6 | 0,79 | ±0 dB | ±0 dB | |
| Vergleichs-beispiel 7 | 0,79 | −2 dB | −1 dB | |
| Vergleichs-beispiel 8 | 0,62 | − | − | 0,40 |
| Vergleichs-beispiel 9 | 0,79 | ±0 dB | ±0 dB | 0,38 |

Aus der Tabelle geht hervor, dass bei Einsatz der organischen Borverbindungen allein (Beispiel 1 und 2) oder in Mischung mit bekannten Dispergatoren (Beispiel 3–5) zur Mahlung ein ausgezeichneter Dispergierungsgrad erzielt wird, ausgewiesen durch die magnetischen und elektroakustischen Daten, die bei Zusatz der Borverbindungen erst vor dem Beguss (Beispiel 8–9) stark abfallen. Die niedrigen Ausrichtungswerte zeigen, dass bei letzteren keine ausreichende Dispergierung stattgefunden hat. Ausserdem wird bei Zusatz der Borverbindungen zur Mahlung ein günstigerer Reibungskoeffizient am fertigen Magnetband, d.h. bessere Laufeigenschaften, als bei Zusatz der Verbindungen vor dem Beguss der magnetischen Dispersion auf den Schichtträger, anstelle von freien Fettsäuren, erzielt.

**Patentansprüche**

1. Verfahren zur Herstellung von magnetischen, bindemittelhaltigen Dispersionen, denen vor dem Beguss auf den Schichtträger eine organische Borverbindung zugesetzt wird, welche erhalten wurde, indem 1–2 Mol mehrwertiger Alkohole mit jeweils soviel benachbarten OH-Gruppen mit 1 Mol Borsäure umgesetzt wurde(n), dass, bezogen auf ein Bor-Atom, insgesamt 5 oder mehr OH-Gruppen vorhanden waren, wonach das so erhaltene Borat mit Ethylenoxid in einem Molverhältnis von 1–40 bezogen auf 1 Mol Borat und/oder mit einer Carbonsäure mit 8–22 C-Atomen umgesetzt wurde, dadurch gekennzeichnet, dass die organische Borverbindung zur Mahlung der magnetischen Dispersion in einer Menge von 3–12 Gewichtsteilen bezogen auf 100 Gewichtsteile magnetischer Pigmente zugesetzt und die Dispersion nach der Mahlung in an sich bekannter Weise mit polymeren Bindemitteln vermischt wird.

2. Verfahren nach Anspruch 1, dadurch gekennzeichnet, dass die Borverbindung ein Glycerinboratoleat ist.

3. Verfahren nach Anspruch 1, dadurch gekennzeichnet, dass die Borverbindung ein Polyoxyethylenglycerinboratoleat ist.

4. Verfahren nach Anspruch 1, dadurch gekennzeichnet, dass die Borverbindung ein (γ-Oleylglyceryl α,β-γ-polyoxyethylenglyceryl α',β')-borat ist.

5. Verfahren nach Anspruch 1–4, dadurch gekennzeichnet, dass 3–6 Gew.-Teile der Borverbindung bezogen auf 100 Gew.-Teile des magnetischen Pigmentes zugesetzt werden.

6. Verfahren nach Anspruch 1–5, dadurch gekennzeichnet, dass eine Mischung der Borverbindungen und an sich bekannter Dispergatoren zur Mahlung der magnetischen Dispersion zugesetzt werden.

7. Verfahren nach Anspruch 1–6, dadurch gekennzeichnet, dass als magnetisches Pigment ein Metallpigment, das im wesentlichen aus Eisen besteht, eingesetzt wird.

8. Verfahren nach Anspruch 1–6, dadurch gekennzeichnet, dass als magnetisches Pigment $Fe_3O_4$ eingesetzt wird.

9. Verfahren nach Anspruch 1–6, dadurch gekennzeichnet, dass als magnetisches Pigment Co-dotiertes $Fe_3O_4$ eingesetzt wird.

10. Verfahren nach Anspruch 1–6, dadurch gekennzeichnet, dass als magnetisches Pigment $CrO_2$ eingesetzt wird.

11. Verfahren nach Anspruch 1–6, dadurch gekennzeichnet, dass als magnetisches Pigment $\gamma$-$Fe_2O_3$ eingesetzt wird.

## Claims

1. Process for the production of magnetic binder-containing dispersions to which an organic boron compound is added before they are coated on the layer support, which boron compound has been obtained in such a manner that 1–2 mols of polyhydric alcohols were reacted with 1 mol of boric acid, which alcohols in each case had such a number of neighbouring OH groups that, based on one boron atom, a total of 5 or more OH groups were present, after which the borate thus obtained was reacted with ethylene oxide in a molar ratio of 1–40, based on 1 mol of borate, and/or with a carboxylic acid with 8–22 C atoms, characterised in that the organic boron compound is added to the grinding operation of the magnetic dispersion in a quantity of 3–12 parts by weight, based on 100 parts by weight of magnetic pigments, and after grinding the dispersion is mixed with polymeric binders in a manner known per se.

2. Process according to Claim 1, characterised in that the boron compound is a glycerol borate oleate.

3. Process according to Claim 1, characterised in that the boron compound is a polyoxyethylene glycerol borate oleate.

4. Process according to Claim 1, characterised in that the boron compound is a ($\gamma$-oleyl-glycerol $\alpha,\beta$-$\gamma$-polyoxyethylene glyceryl $\alpha',\beta'$)-borate.

5. Process according to Claim 1–4, characterised in that 3–6 parts by weight of the boron compound, based on 100 parts by weight of the magnetic pigment, are added.

6. Process according to Claim 1–5, characterised in that a mixture of the boron compounds and dispersing agents known per se is added to the grinding operation of the magnetic dispersion.

7. Process according to Claim 1–6, characterised in that a metal pigment consisting essentially of iron is used as the magnetic pigment.

8. Process according to Claim 1–6, characterised in that $Fe_3O_4$ is used as the magnetic pigment.

9. Process according to Claim 1–6, characterised in that Co-doped $Fe_3O_4$ is used as the magnetic pigment.

10. Process according to Claim 1–6, characterised in that $CrO_2$ is used as the magnetic pigment.

11. Process according to Claim 1–6, characterised in that $\gamma$-$Fe_2O_3$ is used as the magnetic pigment.

## Revendications

1. Procédé de production de dispersions contenant des liants, magnétiques, auxquelles est ajouté avant la coulée sur les supports de couche un composé organique de bore qui a été obtenu en faisant réagir avec 1 mole d'acide borique 1 à 2 moles d'alcools polyvalents portant dans chaque cas suffisamment de groupes OH voisins pour qu'il y ait, par rapport à 1 atome de bore, au total 5 ou plus de 5 groupes OH présents, après quoi le borate ainsi obtenu a été amené à réagir avec l'oxyde d'éthylène dans un rapport molaire de 1–40 pour 1 mole de borate et/ou avec un acide carboxylique ayant 8 à 22 atomes de carbone, caractérisé en ce que le composé organique de bore est ajouté en vue du broyage de la dispersion magnétique en une quantité de 3 à 12 parties en poids pour 100 parties en poids de pigments magnétiques et la dispersion est mélangée après le broyage, d'une manière connue, avec des liants polymériques.

2. Procédé suivant la revendication 1, caractérisé en ce que le composé de bore est un borato-oléate de glycérol.

3. Procédé suivant la revendication 1, caractérisé en ce que le composé de bore est un borato-oléate de polyoxyéthylène-glycérol.

4. Procédé suivant la revendication 1, caractérisé en ce que le composé de bore est un ($\gamma$-oléyl-glycéryl-$\alpha,\beta$-$\gamma$-polyoxyéthylène-glycéryl-$\alpha',\beta'$)-borate.

5. Procédé suivant les revendications 1–4, caractérisé en ce que 3 à 6 parties en poids du composé de bore sont ajoutées pour 100 parties en poids du pigment magnétique.

6. Procédé suivant les revendications 1–5, caractérisé en ce qu'un mélange des composés de bore et de dispersants connus est ajouté en vue du broyage de la dispersion magnétique.

7. Procédé suivant les revendications 1–6, caractérisé en ce qu'on utilise comme pigment magnétique un pigment métallique qui est principalement formé de fer.

8. Procédé suivant les revendications 1–6, caractérisé en ce qu'on utilise $Fe_3O_4$ comme pigment magnétique.

9. Procédé suivant les revendications 1–6, caractérisé en ce qu'on utilise comme pigment magnétique du $Fe_3O_4$ dopé au Co.

10. Procédé suivant les revendications 1–6, caractérisé en ce qu'on utilise $CrO_2$ comme pigment magnétique.

11. Procédé suivant les revendications 1–6, caractérisé en ce qu'on utilise du $\gamma$-$Fe_2O_3$ comme pigment magnétique.